# EUROPÄISCHE PATENTANMELDUNG

(11) **EP 1 433 969 A1**
(43) Veröffentlichungstag der Anmeldung: **30.06.2004**
(21) Anmeldenummer: 02406142.6
(22) Anmeldetag: 24.12.2002
(51) Int. Cl.: F16D 3/72, F16D 11/10

(54) **Schlingfederkupplung, sowie ein landwirtschaftliches Gerät mit einer solchen Schlingfederkupplung**

(71) Anmelder: Sulzer Markets and Technology AG, 8401 Winterthur (CH)
(72) Erfinder: Graf, Hans-Rudolf, Dr., 8400 Winterthur (CH); Stürchler, Rudolf, 8488 Turbenthal (CH)
(74) Vertreter: Sulzer Management AG

(57) **Zusammenfassung**

Erfindungsgemäss wird eine Schlingfederkupplung (1) mit einer Antriebswelle (2) und einer Abtriebswelle (3), die jeweils um eine Antriebsachse (21) und eine Abtriebsachse (31) drehbar angeordnet sind, vorgeschlagen. Eine Schlingfeder (4) hält die Antriebswelle (2) und die Abtriebswelle (3) in einem eingekuppelten Zustand in Wirkverbindung, wobei ferner eine Sperre (5) vorgesehen ist, mit welcher die Schlingfederkupplung (1) in einen ausgekuppelten Zustand überführbar ist. Dabei sind Mittel (6) vorgesehen, mit welchen Vibrationen der Schlingfederkupplung (1) im ausgekuppelten Zustand minimierbar sind.

## Beschreibung

Die Erfindung betrifft eine Schlingfederkupplung, sowie ein landwirtschaftliches Gerät mit einer solchen Schlingfederkupplung gemäss dem Oberbegriff des unabhängigen Anspruchs der jeweiligen Kategorie.

Eine Schlingfederkupplung besteht im wesentlichen aus einer Schraubenfeder, die auch als Schlingfeder bezeichnet wird und um zwei gegeneinander gesetzte, voneinander getrennte Wellen gewickelt ist. Dabei ist der Innendurchmesser der Spiralfeder ein wenig kleiner gewählt als der Durchmesser der beiden Wellen, so dass die beiden Wellen im eingekuppelten Zustand über die Schlingfeder in wirkfester Verbindung stehen. Bei den beiden Wellen handelt es sich in der Regel um eine Antriebswelle, die zum Antrieb beispielsweise mit einem Motor verbunden ist, sowie um eine Abtriebswelle, die mit einer anzutreibenden Einrichtung in Wirkverbindung steht. Die Schlingfederkupplung dient in diesem Fall im eingekuppelten Zustand zur Übertragung eines Antriebsdrehmoments von der Antriebswelle auf die Abtriebswelle.

Dabei bewirkt die Schlingfederkupplung in einer Antriebsdrehrichtung eine kraftschlüssige Verbindung zwischen der Antriebswelle und der Abtriebswelle und in der entgegengesetzten Drehrichtung einen Freilauf. Sie hat also, beispielsweise im Gegensatz zu einer Magnetkupplung oder einer Scheibenkupplung, nur eine Wirkrichtung. Um die Schlingfederkupplung beim Betrieb auch in der Antriebsdrehrichtung auskuppeln zu können, kann sie eine Sperrklinke aufweisen, die mechanisch oder elektromagnetisch betätigt werden kann. Die Sperrklinke kann dabei so in Wirkverbindung mit der Schlingfeder gebracht werden, dass sich die Schlingfeder beispielsweise im Bereich der Antriebswelle öffnet, dass heisst, dass der Federdurchmesser im Bereich der Antriebswelle vergrössert wird. Dadurch, dass die Sperrklinke die Schlingfeder blockiert, wird die Reibungskraft zwischen Schlingfeder und Antriebswelle so stark herabgesetzt, dass die Abtriebswelle nicht mehr angetrieben werden kann. Die Abtriebswelle kommt zum Stillstand, während sich die Antriebswelle unter der geöffneten Schlingfeder bei schwacher Reibung weiter dreht, so dass die Antriebswelle von der Abtriebswelle im wesentlichen entkoppelt ist.

Die aus dem Stand der Technik bekannten Schlingfederkupplungen neigen dabei im ausgekuppelten Zustand infolge einer inhärenten Instabilität zu Vibrationen.

Dabei ist im Rahmen dieser Anmeldung unter dem ausgekoppelten Zustand jeder Zustand der Schlingfederkupplung zu verstehen, in welchem die Schlingfeder entweder in Bezug auf die Antriebswelle oder auf die Abtriebswelle oder in Bezug auf beide eine von Null verschiedene Relativdrehzahl aufweist. Das heisst, auch der Zustand der Schlingfederkupplung während eines Einkuppelvorgangs oder eines Auskuppelvorgang, also auch wenn zwischen der Antriebsachse und der Abtriebsachse nur noch ein Bruchteil eines maximalen Antriebsdrehmoments übertragbar ist, weil die Schlingfeder bereits teilweise von der Antriebswelle und / oder der Abtriebswelle abgehoben ist, wird im Rahmen dieser Anmeldung als ausgekuppelter Zustand bezeichnet.

Die oben erwähnten inhärenten Instabilitäten und damit verbundenen Vibrationen haben ihre Ursache unter anderem darin, dass im ausgekuppelten Zustand zwischen den wirkenden Kräften, insbesondere den Federkräften und den Reibungskräften, und / oder den angreifenden Drehmomenten auf der Antriebsseite einerseits und der Abtriebsseite anderseits ein Gleichgewicht herrscht, wobei die Antriebsseite und die Abtriebsseite durch die Schlingfeder mechanisch gekoppelt sind. Somit entsteht ein schwingungsfähiges System, das auf Grund der komplizierten Kopplungen der wirkenden Kräfte und angreifenden Drehmomente zu Schwingungen neigt, was beim Ein- oder Auskuppelvorgang, sowie im ausgekuppelten Zustand selbst unter anderem zu störenden Geräuschentwicklungen, einem ruckartigen Bewegungsablauf und anderen störenden Auswirkungen im Betrieb führen kann.

Die Aufgabe der Erfindung ist es daher, eine verbesserte Schlingfederkupplung vorzuschlagen, bei welcher die aus dem Stand der Technik bekannten, in einem ausgekuppelten Zustand auftretenden inhärenten Instabilitäten weitgehend vermeidbar und Vibrationen minimierbar sind.

Die diese Aufgabe lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Erfindungsgemäss wird somit eine Schlingfederkupplung mit einer Antriebswelle und einer Abtriebswelle, die jeweils um eine Antriebsachse und eine Abtriebsachse drehbar angeordnet sind, vorgeschlagen. Eine Schlingfeder hält die Antriebswelle und die Abtriebswelle in einem eingekuppelten Zustand in Wirkverbindung, wobei ferner eine Sperre vorgesehen ist, mit welcher die Schlingfederkupplung in einen ausgekuppelten Zustand überführbar ist. Dabei sind Mittel vorgesehen, mit welchen Vibrationen der Schlingfederkupplung im ausgekuppelten Zustand minimierbar sind.

Die erfindungsgemässe Schlingfederkupplung weist zur Übertragung einer mechanischen Energie bzw. einer mechanischen Leistung von einer Antriebswelle auf eine Abtriebswelle eine Schlingfeder, aufgebaut aus einem Federdraht, auf, die die Antriebswelle und die Abtriebswelle gemeinsam umschlingt. Dabei kann die Antriebswelle mit einem Antrieb verbunden sein, der auf die Antriebswelle ein Antriebsdrehmoment derart ausübt, dass sich in einem eingekuppelten Zustand die Schlingfeder zusammenzieht, wodurch die Schlingfeder an die Antriebswelle und an die Abtriebswelle mit einer Anpresskraft, die beispielsweise vom wirkenden Antriebsdrehmoment abhängig sein kann, angepresst wird. Aufgrund der Reibung zwischen der Schlingfeder und der Antriebswelle sowie zwischen der Schlingfeder und der Abtriebswelle hält die Schlingfeder die Antriebswelle und die Abtriebswelle über eine Umfangskraft in Wirkverbindung, das heisst die Schlingfeder hält die Schlingfederkupplung in einem eingekuppelten Zustand. Im eingekuppelten Zustand ist somit ein Antriebsdrehmoment von der Antriebswelle auf die Abtriebswelle übertragbar, so dass beispielsweise eine Arbeitsvorrichtung, die mit der Abtriebswelle in Wirkverbindung steht, antreibbar ist.

Zur Überführung der Schlingfederkupplung in einen ausgekuppelten Zustand, das heisst zum Öffnen der Kupplung, weist die Schlingfederkupplung eine Sperre auf, die bevorzugt mit einem Ende der Schlingfeder so in Wirkverbindung gebracht werden kann, dass auf den Federdraht der Schlingfeder im wesentlichen in tangentialer Richtung, bevorzugt tangential in Bezug auf eine Richtung der Antriebsachse, eine Kraft ausübbar ist, wodurch sich ein Innendurchmesser der Schlingfeder vergrössert und die Schlingfeder blockiert wird. Das heisst die Sperre ist dazu geeignet die Schlingfeder zumindest teilweise von der Antriebswelle und / oder der Abtriebswellle abzuheben. Dadurch reduziert sich im ausgekuppelten Zustand die Anpresskraft, mit der die Schlingfeder an die Antriebswelle und / oder an die Abtriebswelle angepresst wird und damit reduziert sich auch die Reibungskraft zwischen Schlingfeder und Antriebswelle und / oder zwischen Schlingfeder und Abtriebswelle. Somit kann im ausgekuppelten Zustand von der Antriebswelle auf die Abtriebswelle kein Antriebsdrehmoment mehr übertragen werden, so dass beispielsweise die Arbeitsvorrichtung, die mit der Abtriebswelle in Wirkverbindung steht, nicht mehr antreibbar ist. Das heisst, im ausgekuppelten Zustand ist der Antrieb von der Arbeitsvorrichtung im wesentlichen vollständig entkoppelt.

Aus dem Stand der Technik bekannte Schlingfederkupplungen neigen dabei im ausgekuppelten Zustand infolge inhärenter Instabilitäten zu Vibrationen. Diese können beispielsweise auf eine stark unregelmässige Verteilung der Reibungskräfte zwischen Schlingfeder und Antriebswelle und / oder Abtriebswelle zurückzuführen sein oder können ihre Ursache darin haben, dass die Schlingfeder ungleichmässig von der Antriebswelle und / oder der Abtriebswelle abhebt. Dabei wird in der Praxis eine Kombination mehrerer Faktoren für das Auftreten der Instabilitäten verantwortlich sein. Insbesondere liegen die Ursachen für diese Vibrationen unter anderem darin, dass im ausgekuppelten Zustand zwischen den wirkenden Kräften, insbesondere den Federkräften, den Reibungskräften, den Trägheitskräften und / oder den angreifenden Drehmomenten auf der Antriebsseite einerseits und der Abtriebsseite anderseits ein Gleichgewicht herrscht, wobei die Antriebsseite und die Abtriebsseite durch die Schlingfeder mechanisch gekoppelt sind. Somit entsteht ein schwingungsfähiges System, das auf Grund der komplizierten Kopplungen der wirkenden Kräfte und angreifenden Drehmomente zu Schwingungen neigt, was beim Ein- oder Auskuppelvorgang, sowie im vollständig ausgekuppelten Zustand selbst, unter anderem zu störenden Geräuschentwicklungen, einem ruckartigen Bewegungsablauf und anderen störenden Auswirkungen im Betrieb führen kann. Dabei können sich diese unerwünschten Vibrationen nicht nur im vollständig ausgekuppelten Zustand negativ auswirken, sondern beispielsweise auch das Abbremsverhalten und / oder das Anfahrverhalten der Schlingfederkupplung beim Ein- bzw. Auskuppelvorgang unvorteilhaft beeinflussen, so dass zum Beispiel ein ruckfreies Anfahren oder Abbremsen der Schlingfederkupplung nicht mehr möglich ist.

Zur Vermeidung bzw. Minimierung der zuvor genannten Vibrationen sind daher an der erfindungsgemässen Schlingfederkupplung Mittel vorgesehen, mit welcher die Vibrationen der Schlingfederkupplung im ausgekuppelten Zustand minimierbar sind.

Bei einem bevorzugten Ausführungsbeispiel einer erfindungsgemässen Schlingfederkupplung sind die Mittel, mit welchen Vibrationen der Schlingfederkupplung minimierbar sind, dadurch realisiert, dass ein vorgebbarer Kontaktbereich der Antriebswelle und / oder der Abtriebswelle einen nicht-kreisförmigen Querschnitt aufweist. Das heisst, durch eine verbesserte Formgebung der Antriebswelle in einem vorgebbaren Bereich, in dem die Feder zumindest im eingekuppelten Zustand ganz oder teilweise anliegt, ist eine bessere Verteilung der Reibungskräfte erzielbar, wodurch die inhärenten Instabilitäten im ausgekuppelten Zustand und damit die Vibrationen der Schlingfederkupplung im ausgekuppelten Zustand minimierbar sind. Der Querschnitt kann dabei im speziellen beispielsweise die Form einer Ellipse oder eines Quadrates mit abgerundeten Ecken oder jede anderen geeignete nicht-kreisförmige Form aufweisen. Wesentlich ist dabei in erster Linie, dass die Schlingfeder im ausgekuppelten Zustand im Kontaktbereich der Antriebswelle / und oder der Abtriebswelle mit variierender Anpresskraft anliegt, wodurch das Auftreten von Instabilitäten minimierbar ist.

In einem anderen bevorzugten Ausführungsbeispiel einer erfindungsgemässen Schlingfederkupplung variiert ein Durchmesser der Antriebswelle und / oder der Abtriebswelle in einem vorgebbaren Kontaktbereich. So kann die Antriebswelle und / oder die Abtriebswelle in Bezug auf ihre jeweilge Achse beispielsweise konisch ausgeführt sein und insbesondere kann der Durchmesser der Antriebswelle entlang der Antriebsachse mit zunehmendem Abstand von der Trennstelle zwischen Antriebswelle und Abtriebswelle in einem vorgebbaren Kontaktbereich zunehmen, so dass die Vorspannung, mit der die Schlingfeder im eingekuppelten Zustand an der Antriebswelle anliegt, mit zunehmendem Abstand von der Trennstelle zwischen Antriebswelle und Abtriebswelle zunimmt, wobei die Anpresskraft, hervorgerufen durch das Antriebsmoment im eingekuppelten Zustand, zur Trennstelle hin zunimmt. Die Sperre, mit welcher die Schlingfederkupplung in den ausgekuppelten Zustand überführbar ist, ist dabei im speziellen so angeordnet, dass die Sperre die Schlingfeder am grössten Wellendurchmesser abhebt. Dadurch ist eine gleichmässigere Verteilung der Reibungskräfte zwischen Schlingfeder und Kontaktbereich der Antriebswelle erreichbar, wodurch die Vibrationen im ausgekuppelten Zustand minimierbar sind.

Bei einem weiteren Ausführungsbeispiel weist ein vorgebbarer Spannbereich der Schlingfeder einen nicht-kreisförmigen Querschnitt auf. Das heisst durch eine verbesserte Formgebung der Schlingfeder in einem vorgebbaren Spannbereich ist eine bessere Verteilung der Reibungskräfte erzielbar, wodurch die inhärenten Instabilitäten im ausgekuppelten Zustand und damit die Vibrationen der Schlingfederkupplung im ausgekuppelten Zustand minimierbar sind. Der Querschnitt kann dabei im speziellen beispielsweise die Form einer Ellipse oder eines Quadrates mit abgerundeten Ecken oder jede andere geeignete nicht-kreisförmige Form aufweisen. Wesentlich ist dabei in erster Linie, dass die Schlingfeder im ausgekuppelten Zustand im Kontaktbereich der Antriebswelle / und oder der Abtriebswelle mit variierender Anpresskraft anliegt.

Bei einer anderen Ausführungsvariante variiert ein Innendurchmesser der Schlingfeder entlang einer Federachse in einem vorgebbaren Bereich. So kann die Schlingfeder in Bezug auf ihre Federachse beispielsweise konisch ausgeführt sein und insbesondere kann der Innendurchmesser der Schlingfeder entlang der Federachse mit zunehmendem Abstand von der Trennstelle zwischen Antriebswelle und Abtriebswelle in einem vorgebbaren Bereich abnehmen, so dass die Anpresskraft, mit der die Schlingfeder im eingekuppelten Zustand an der Antriebswelle anliegt, mit zunehmendem Abstand von der Trennstelle zwischen Antriebsachse und Abtriebsachse zunimmt. Die Sperre, mit welcher die Schlingfederkupplung in den ausgekuppelten Zustand überführbar ist, ist dabei insbesondere so angeordnet, dass die Sperre die Schlingfeder an ihrem kleinsten Innendurchmesser abhebt, also in dem Bereich, an dem die Schlingfeder im eingekuppelten Zustand mit der grössten Anpresskraft an der Antriebswelle anliegt. Dadurch ist eine gleichmässigere Verteilung der Reibungskräfte zwischen Schlingfeder und Antriebswelle im ausgekuppleten Zustand erreichbar, wodurch die Vibrationen im ausgekuppelten Zustand weitgehend vermeidbar sind.

Zur Minimierung der Vibrationen im ausgekuppelten Zustand kann an der Antriebswelle und / oder an der Abtriebswelle auch ein Spannring zum Anpressen der Schlingfeder vorgesehen sein, was ebenfalls zu einer verbesserten Verteilung der Reibungskräfte zwischen der Schlingfeder und der Antriebsachse und / oder der Abtriebsachse führt.

Eine weitere vorteilhafte Massnahme kann darin bestehen, dass ein Drahtquerschnitt der Schlingfeder entlang der Federachse in einem vorgebbaren Abschnitt variiert. So kann der Drahtquerschnitt der Schlingfeder entlang der Federachse mit zunehmendem Abstand von der Trennstelle zwischen Antriebswelle und Abtriebswelle in einem vorgebbaren Bereich zunehmen, so dass die Anpresskraft, mit der die Schlingfeder im eingekuppelten Zustand an der Antriebswelle und / oder der Abtriebswelle anliegt, mit zunehmendem Abstand von der Trennstelle zwischen Antriebswelle und Abtriebswelle zunimmt und / oder, dass im ausgekuppelten Zustand mit zunehmendem Abstand von der Trennstelle die notwendige Kraft zum Abheben der Schlingfeder von der Antriebswelle und / oder der Abtriebswelle zunimmt. Die Sperre, mit welcher die Schlingfederkupplung in den ausgekuppelten Zustand überführbar ist, ist dabei insbesondere so angeordnet, dass die Sperre die Schlingfeder an ihrem grössten Drahtquerschnitt abhebt. Dadurch ist ebenfalls eine gleichmässigere Verteilung der Reibungskräfte zwischen Schlingfeder und Antriebswelle im ausgekuppleten Zustand erreichbar, wodurch, wie bereits mehrfach erwähnt, die Vibrationen im ausgekuppelten Zustand minimierbar sind.

Bei einem weiteren für die Praxis wichtigen Ausführungsbeispiel einer erfindungsgemässen Schlingfederkupplung ist die Schlingfeder in einem vorgebbaren Bereich in ein Dämpfungsmaterial eingebettet, wodurch Vibrationen gedämpft werden können und so im ausgekuppelten Zustand minimierbar sind. Dabei kann die Schlingfederkupplung in dem vorgebbaren Bereich beispielsweise in einer mit einem Fluid als Dämpfungsmaterial gefüllten Körper, insbesondere auch in einer Hülse gelagert sein. Das Fluid kann dabei je nach Anforderung eine Flüssigkeit, ein Gas oder beispielsweise ein Elastomer sein. Das Dämpfungsmaterial kann in einer speziellen Ausführungsform beispielsweise auch ein an der Schlingfeder in einem vorgebbaren Bereich anliegender Schlauch oder ein Strumpf aus einem geeigneten Material, wie beispielsweise ein Schlauch oder ein Strumpf aus Metall oder Kunststoff sein.

Darüberhinaus können Vibrationen der Schlingfederkupplung auch dadurch minimiert werden, dass Mittel zur Einstellung einer vorgebbaren Resonanzfrequenz vorgesehen sind. Die Schlingfeder stellt als ganzes ein schwingungsfähiges System mit einem charakteristischen Eigenschwingungsspektrum dar und kann daher zu Resonanzschwingungen angeregt werden, die insbesondere im ausgekuppelten Zustand zu den störenden Vibrationen führen. Das heisst, durch Verstimmen des gesamten schwingungsfähigen Systems der Schlingfederkupplung kann das Eigenschwinungsspektrum derart verändert werden, dass die störenden Vibrationen im ausgekuppelten Zustand im wesentlichen nicht mehr anregbar sind. Dazu können eine oder mehrere Komponenten der Schlingfederkupplung, beispielsweise die Schlingfeder selbst, so ausgestaltet und / oder aus einem geeigneten Material gefertigt sein, dass die Schlingfederkupplung im Frequenzbereich der Vibrationen besonders stark bedämpft wird, so dass die störenden Instabilitäten und Vibrationen im wesentlichen nicht auftreten. Möglich ist auch, dass die Massen der verschiedenen Komponenten der Schlingfederkupplung, beispielsweise die Masse der Antriebswelle und / oder der Abtriebswelle und / oder der Schlingfeder so gewählt werden, dass die Schlingfederkupplung im Frequenzbereich der Vibrationen besonders stark bedämpft wird, bzw. dass die Resonanzfrequenz in einem anderen Frequenzbereich als die Vibrationen zu liegen kommt, so dass die störenden Instabilitäten und Vibrationen im wesentlichen nicht auftreten. Auch können beispielsweise an der Schlingfeder an geeigneter Stelle zusätzliche Massen, z.B. an der Antriebswelle und / oder an der Abtriebswelle vorgesehen sein, wodurch das Eigenschwingungsspektrum geeignet veränderbar ist.

Darüberhinaus sind weitere Massnahmen zur Veränderung des Eigenschwingungsspektrums möglich. So kann zum Beispiel die Schlingfeder und / oder die Abtriebswelle und / oder die Antriebswelle mit einem Material beschichtet sein, das durch seine speziellen Reibeigenschaften das Eigenschwingungspektrum verschiebt.

Es versteht sich, dass alle zuvor beispielhaft ausgeführten Massnahmen, die als Mittel zur Minimierung von Vibrationen der Schlingfederkupplung im ausgekuppelten Zustand geeignet sind, bei speziellen Ausführungsvarianten der erfindungsgemässen Schlingfederkupplung auch in allen beliebigen Kombinationen realisiert sein können. Insbesondere kann die Sperre mit welcher die Schlingfederkupplung in einen ausgekoppelten Zustand überführbar ist, sowohl im Bereich der Antriebswelle als auch im Bereich der Abtriebswelle vorgesehen sein. Das heisst, zum Überführen der Schlingfeder in einen ausgekuppelten Zustand kann die Schlingfeder durch die Sperre entweder von der Antriebswelle oder von der Abtriebswellle abgehoben werden. Insbesondere ist es in speziellen Anwendungen sogar möglich, dass an der Schlingfederkupplung mehr als eine Sperre vorgesehen ist, so dass die Schlingfeder sowohl von der Antriebswelle als auch von der Abtriebswelle abhebbar ist.

Die Erfindung betrifft ferner im besonderen ein landwirtschaftliches Gerät, insbesondere Gartengerät, im speziellen eine Heckenschere oder einen Rasenmäher, mit einer Schlingfederkupplung, wie sie zuvor an zahlreichen Ausführungsbeispielen exemplarisch beschrieben wurde. Dabei ist die erfindungsgemässe Schlingfederkupplung selbstverständlich auch in einer Reihe anderer Vorrichtungen einsetzbar, die nicht dem Bereich landwirtschaftlichen Geräts zuzuordnen sind. Beispielsweise kann auch in Bohr- oder Schraubgeräten oder in Radantrieben aller Art, insbesondere in der Spielzeugindustrie, die erfindungsgemässe Schlingfederkupplung vorteilhaft eingesetzt werden. Ein weites Anwendungsfeld sind dabei unter anderem auch Scharniere aller Art. Häufig besteht die Notwendigkeit, dass eine Einrichtung, die mit einem Scharnier mit einer Vorrichtung beweglich verbunden ist, in einer beliebigen Scharnierstellung stabil positionierbar ist, wobei es gleichzeitig möglich sein muss, die Einrichtung mit relativ kleinem Kraftaufwand in eine andere stabile Scharnierposition bringen zu können. Ein typisches Beispiel dafür ist die Abdeckung eines tragbaren Computers, die über ein Scharnier mit einem Gehäuse des tragbaren Computers verbunden ist, wobei die Abdeckung ein Display des Computers umfasst. Obwohl hier die Abtriebswelle in der Regel keine Drehbewegungen ausführt, kann hier dennoch die erfindungsgemässe Schlingfederkupplung ohne weiteres Verwendung finden, da auch hier im ausgekuppelten Zustand, also wenn die Scharniere bewegt wird, die gleichen Probleme mit Vibrationen wie bei den oben diskutierten Anwendungsbeispielen auftreten.

Im folgenden wird die Erfindung an Hand der schematischen Zeichnung näher erläutert. Es zeigen:
- Fig. 1: ein erstes Ausführungsbeispiel einer erfindungsgemässen Schlingfederkupplung;
- Fig. 2: ein zweites Ausführungsbeispiel gemäss Fig. 1;
- Fig. 3: eine Schlingfederkupplung gemäss Fig. 1 im ausgekuppelten Zustand;
- Fig. 4: ein drittes Ausführungsbeispiel gemäss Fig. 1 im Schnitt mit elektromagnetisch betätigbarer Sperre;
- Fig. 5a: einen Schnitt durch ein Ausführungsbeispiel gemäss Fig. 1 entlang der Schnittlinie I-I;
- Fig. 5b: ein anderes Ausführungsbeispiel gemäss Fig. 5a;
- Fig. 6: ein drittes Ausführungsbeispiel einer erfindungsgemässen Schlingfederkupplung;
- Fig. 7: einen Schnitt entlang der Linie I-I durch ein weiteres Ausführungsbeispiel gemäss Fig. 1;
- Fig. 8: eine Schlingfeder mit variablem Innendurchmesser;
- Fig. 9: ein Ausführungsbeispiel einer erfindungsgemässen Schlingfederkupplung mit Spannring;
- Fig. 10: eine Schlingfederkupplung mit variablem Drahtquerschnitt der Schlingfeder;
- Fig. 11: Schlingfederkupplung, eingebettet in ein Dämpfungsmaterial.

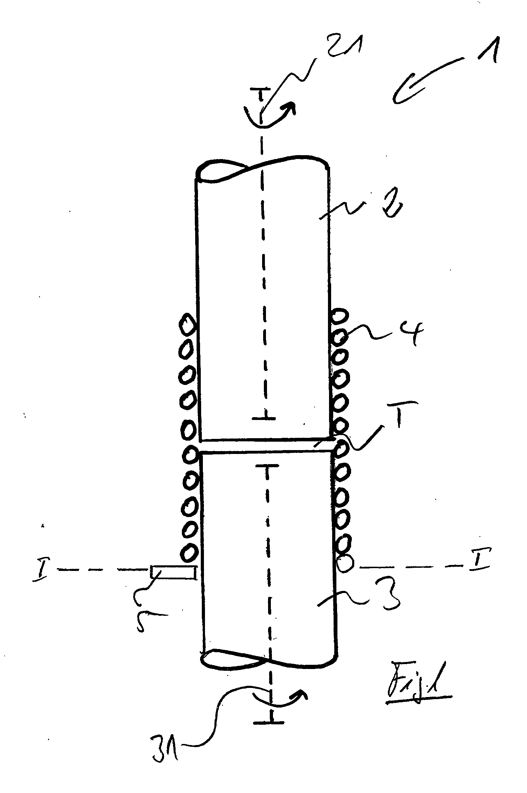

Die Fig. 1 zeigt in einer schematischen Darstellung ein erstes Ausführungsbeispiel einer erfindungsgemässen Schlingfederkupplung, die im folgenden gesamthaft mit dem Bezugszeichen 1 bezeichnet wird und anhand derer das Funktionsprinzip der erfindungsgemässen Schlingfederkupplung 1 exemplarisch erläutert werden soll.

Die erfindungsgemässe Schlingfederkupplung 1 umfasst eine Antriebswelle 2 und eine Abtriebswelle 3, die jeweils um eine Antriebsachse 21 und eine Abtriebsachse 31, wie durch die Pfeile angedeutet, drehbar angeordnet sind. Eine Schlingfeder 4 hält die Antriebswelle 2 und die Abtriebswelle 3 in einem eingekuppelten Zustand in Wirkverbindung. Dabei handelt es sich bei der Antriebswelle 2 und der Abtriebswelle 3 um zwei verschiedene Wellen, die an einer Trennstelle T voneinander getrennt angeordnet sind. Die Schlingfeder 4, die aus einem geeigneten Federdraht aufgebaut und in Form einer Schraubenfeder ausgeführt ist, umschlingt gemeinsam die Antriebswelle 2 und die Abtriebswelle 3 und dient in der in Fig.1 dargestellten Anordnung der Übertragung einer mechanischen Energie bzw. einer mechanischen Leistung, insbesondere eines Antriebsdrehmoments, von der Antriebswelle 2 auf die Abtriebswelle 3. Dabei ist die Antriebswelle 2 mit einem nicht gezeigten Antrieb verbunden, der auf die Antriebswelle 2 ein Antriebsdrehmoment derart ausübt, dass sich in einem eingekuppelten Zustand die Schlingfeder 4 zusammenzieht, wodurch die Schlingfeder 4 an die Antriebswelle 2 und / oder an die Abtriebswelle 3 mit einer Anpresskraft, die beispielsweise vom wirkenden Antriebsdrehmoment abhängig sein kann, angepresst wird. Der nicht gezeigte Antrieb kann beispielsweise ein Elektromotor, ein Verbrennungsmotor oder ein anderer Antrieb, im speziellen auch ein einfacher mechanischer Antrieb wie beispielsweise ein Hebel sein. Aufgrund der Reibung zwischen der Schlingfeder 4 und der Antriebswelle 2 sowie zwischen der Schlingfeder 4 und der Abtriebswelle 3 hält die Schlingfeder 4 die Antriebswelle 2 und die Abtriebswelle 3 über eine Umfangskraft in Wirkverbindung, das heisst die Schlingfeder 4 hält die Schlingfederkupplung 1 in einem eingekuppelten Zustand. Im eingekuppelten Zustand ist somit ein Antriebsdrehmoment von der Antriebswelle 2 auf die Abtriebswelle 3 übertragbar, so dass eine nicht gezeigte Arbeitsvorrichtung, die mit der Abtriebswelle 3 in Wirkverbindung steht, antreibbar ist. Die Arbeitsvorrichtung kann beispielsweise die Kette einer Kettensäge, das Messer einer Heckenschere sein oder kann eine Maschine, wie beispielsweise einen Rasenmäher, mittels eines Fahrwerks, in Bewegung setzten.

Zur Entkopplung der Abtriebswelle 3 von der Antriebswelle 2, also zur Überführung der Schlingfederkupplung 1 in einen ausgekuppelten Zustand, das heisst zum Öffnen der Kupplung, weist die Schlingfederkupplung 1 eine Sperre 5 auf, die bevorzugt mit einem Ende der Schlingfeder 4 so in Wirkverbindung gebracht werden kann, dass auf den Federdraht der Schlingfeder 4, in im wesentlichen tangentialer Richtung in Bezug auf die Richtung der Antriebsachse 31, eine Kraft ausübbar ist, wodurch sich ein Innendurchmesser 10 der Schlingfeder 4 vergrössert. Das heisst, die Sperre 5 ist dazu geeignet, die Schlingfeder 4 zumindest teilweise von der Antriebswelle 3 abzuheben. Dadurch reduziert sich im ausgekuppelten Zustand die Anpresskraft, mit der die Schlingfeder 4 an die Antriebswelle 2 und / oder an die Abtriebswelle 3 angepresst wird und damit reduziert sich auch die Reibungskraft zwischen Schlingfeder 4 und Antriebswelle 2 und / oder zwischen Schlingfeder 4 und Abtriebswelle 3. Dadurch kann im ausgekuppelten Zustand von der Antriebswelle 2 auf die Abtriebswelle 3 kein Antriebsdrehmoment mehr übertragen werden, so dass beispielsweise die Arbeitsvorrichtung, die mit der Abtriebswelle 3 in Wirkverbindung steht, nicht mehr antreibbar ist. Das heisst, im ausgekuppelten Zustand ist der Antrieb von der Arbeitsvorrichtung im wesentlichen vollständig entkoppelt. Wie später an einem speziellen Ausführungsbeispiel noch näher erläutert werden wird, kann die Position der Sperre 5 so gesteuert und / oder geregelt werden, dass die Sperre 5 mit der Schlingfeder 4 zur Überführung der Schlingfederkupplung 1 in den ausgekuppelten Zustand in Wirkverbindung gebracht werden kann.

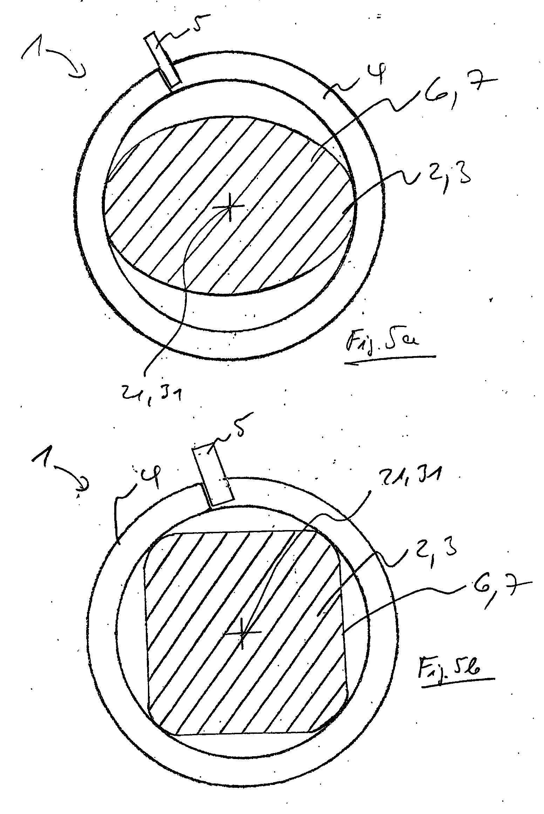

Zur Vermeidung bzw. Minimierung von inhärenten Instabilitäten der Schlingfederkupplung 1 im ausgekuppelten Zustand, die zu unerwünschten Vibrationen der Schlingfederkupplung 1 führen, sind an der erfindungsgemässen Schlingfederkupplung 1 Mittel 6 vorgesehen, mit welcher die Vibrationen der Schlingfederkupplung 1 im ausgekuppelten Zustand minimierbar sind. Die Mittel 6 sind in den Darstellungen der Fig. 1 bis Fig. 4 nicht zu erkennen und werden in den Fig. 5 bis Fig. 11, insbesondere auch an Schnittdarstellungen, an verschiedenen Ausführungsbeispielen noch detailliert erläutert werden.

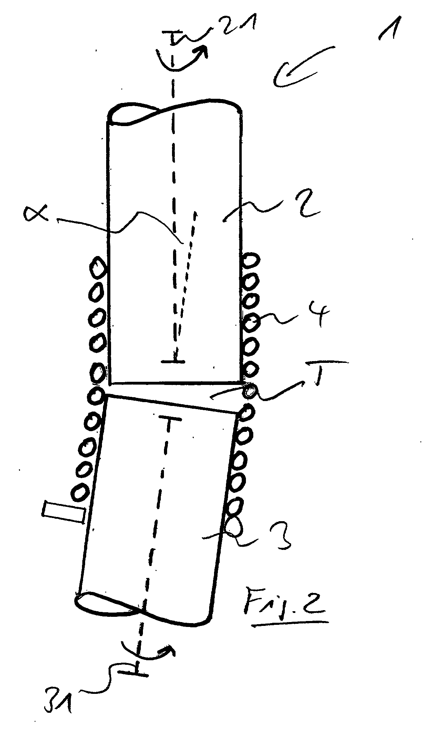

Fig. 2 zeigt ein zweites Ausführungsbeispiel gemäss Fig. 1, bei welchem die Antriebsachse 21 und die Abtriebsachse 31 nicht fluchtend, sondern unter einem vorgebbbaren Winkel α angeordnet sind. Dabei kann der Winkel einen festen Wert haben oder im Betriebszustand in vorgebbaren Grenzen auch variabel sein.

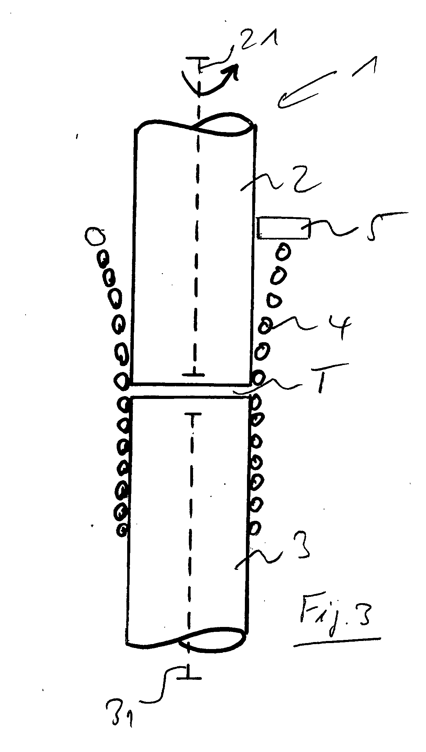

In Fig.3 ist eine Schlingfederkupplung 1 gemäss Fig. 1 im ausgekuppelten Zustand dargestellt. Die Sperre 5 steht mit dem Ende der Schlingfeder 4 an der Antriebsachse 2 in Wirkverbindung, wodurch auf die Schlingfeder 4 im wesentlichen tangential in Bezug auf die Richtung der Antriebsachse 21, eine Kraft ausgeübt wird, wodurch sich ein Innendurchmesser 10 der Schlingfeder 4 vergrössert und die Schlingfeder blockiert wird. Die Sperre 5 ist somit, wie in Fig. 3 schematisch dargestellt, dazu geeignet die Schlingfeder 4 zumindest teilweise von der Antriebswelle 2 und / oder der Abtriebswellle 3 abzuheben. Dadurch reduziert sich im ausgekuppelten Zustand die Anpresskraft, mit der die Schlingfeder 4 an die Antriebswelle 2 und / oder an die Abtriebswelle 3 angepresst wird und damit reduziert sich auch die Reibungskraft zwischen Schlingfeder 4 und Antriebswelle 2 und / oder zwischen Schlingfeder 4 und Abtriebswelle 3. Die Antriebswelle 2 wird dabei, wie durch den Pfeil angedeutet, weiter von dem nicht gezeigten Antrieb um die Antriebsachse 21 in Drehbewegung versetzt, ohne jedoch ein Antriebsdrehmoment auf die Abtriebswelle 3 zu übertragen. Das heisst, die Antriebswelle 2 dreht sich unter schwacher Reibung unter der Schlingfeder 4 weiter, während die Abtriebsachse 3 und die Schlingfeder 4 nicht mehr dreht.

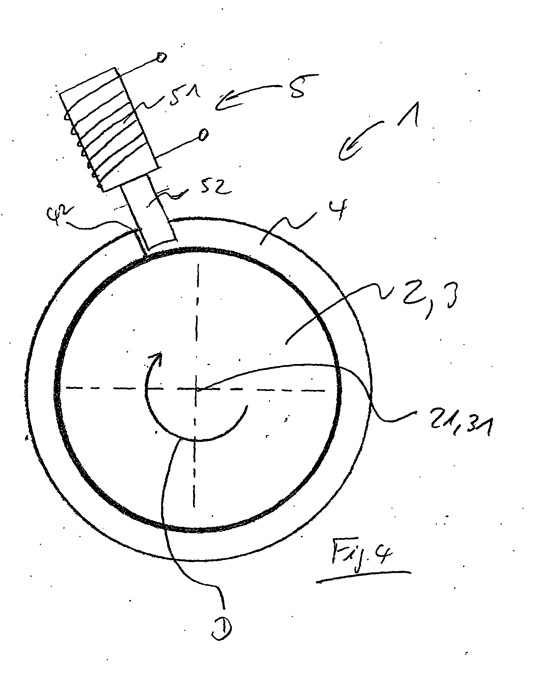

In Fig. 4 ist im Schnitt ein drittes Ausführungsbeispiel gemäss Fig. 1 mit einer elektromagnetisch betätigbaren Sperre 5 dargestellt. Die Sperre 5 umfasst einen Elektromagneten 51, in welchem in einer axialen Richtung ein Anker 52 beweglich angeordnet ist. Insbesondere kann der Elektromagnet 51 zur Steuerung und / oder Regelung des Ein- und / oder Auskuppelvorgangs mit einer in Fig. 4 nicht gezeigten, im speziellen frei programmierbaren Ansteuereinheit signalverbunden sein. Der Pfeil D gibt die Drehrichtung der Antriebsachse 21 an. Eine nicht gezeigte Sicherheitseinrichtung, beispielsweise in Form einer starken Druckfeder, hält den Anker 52 automatisch in einer Position, in der der Anker 52 in Wirkverbindung mit einem Ende 42 der Schlingfeder 4 steht, so dass sich die Schlingfederkupplung 1 aus Sicherheitsgründen automatisch, das heisst bei nicht aktiviertem Elektromagneten 51, in einem ausgekuppelten Zustand befindet. Durch Beaufschlagung des Elektromagneten 51 mit einem elektrischen Strom wird der Anker 52 so weit in den Elektromagneten gezogen, dass der Anker 52 das Ende 42 der Schlingfeder 4 freigibt, wodurch die Schlingfederkupplung 1 in den eingekuppelten Zustand überführbar ist.

Die Fig. 5a und Fig. 5b zeigen je einen Schnitt durch ein Ausführungsbeispiel gemäss Fig. 1 entlang der Schnittlinie I-I. Bei den hier dargestellten Ausführungsbeispielen einer erfindungsgemässen Schlingfederkupplung 1 sind die Mittel 6, mit welchen Vibrationen der Schlingfederkupplung 1 minimierbar sind, dadurch realisiert, dass ein vorgebbarer Kontaktbereich 7 der Antriebswelle 2 einen nicht-kreisförmigen Querschnitt aufweist. Das heisst, durch eine verbesserte Formgebung der Antriebswelle 2 ist eine bessere Verteilung der Reibungskräfte zwischen Schlingfeder 4 und Antriebswelle 2 erzielbar, wodurch die inhärenten Instabilitäten im ausgekuppelten Zustand und damit die Vibrationen der Schlingfederkupplung 1 im ausgekuppelten Zustand minimierbar sind. Der Querschnitt kann dabei im speziellen beispielsweise die Form einer Ellipse, wie in Fig. 5a dargestellt, oder eines Quadrates mit abgerundeten Ecken, wie bei dem Ausführungsbeispiel aus Fig. 5b, oder jede anderen geeignete nicht-kreisförmige Form aufweisen. Wesentlich ist dabei in erster Linie, dass die Schlingfeder 4 im ausgekuppelten Zustand im Kontaktbereich 7 der Antriebswelle 2 / und oder der Abtriebswelle 3 mit variierender Anpresskraft anliegt, wodurch das Auftreten von Instabilitäten minimierbar ist.

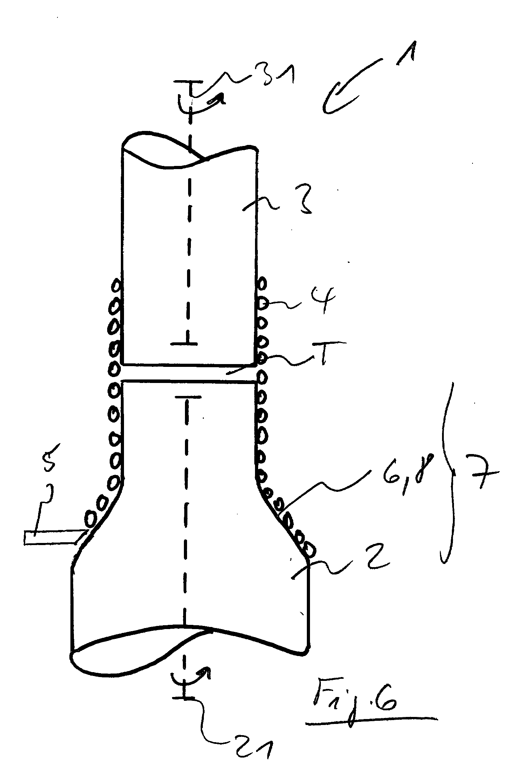

In Fig. 6 ist ein drittes Ausführungsbeispiel einer erfindungsgemässen Schlingfederkupplung 1 in schematischer Darstellung in eingekuppeltem Zustand gezeigt. Bei dem hier dargestellten bevorzugten Ausführungsbeispiel variiert ein Durchmesser 8 der Antriebswelle 2 in einem vorgebbaren Kontaktbereich 7. So kann die Antriebswelle 2 in Bezug auf ihre Antriebsachse 21 beispielsweise, wie hier gezeigt, konisch ausgeführt sein. Das heisst, der Durchmesser 8 der Antriebswelle 2 entlang der Antriebsachse 21 nimmt mit zunehmendem Abstand von der Trennstelle T zwischen Antriebsachse 2 und Abtriebsachse 3 in einem vorgebbaren Kontaktereich 7 zu, so dass die Anpresskraft, mit der die Schlingfeder 4 im eingekuppelten Zustand an der Antriebswelle anliegt, mit zunehmendem Abstand von der Trennstelle T zwischen Antriebsachse 2 und Abtriebsachse 3 zunimmt. Die Sperre 5, mit welcher die Schlingfederkupplung 1 in den ausgekuppelten Zustand überführbar ist, ist dabei in dem hier gezeigten Ausführungsbeispiel so angeordnet, dass die Sperre 5 die Schlingfeder 4 am grössten Wellendurchmesser 10 abhebt. Dadurch ist eine geeignetere Verteilung der Reibungskräfte zwischen Schlingfeder 4 und der Antriebswelle 2 erreichbar, wodurch ebenfalls die Vibrationen im ausgekuppelten Zustand minimierbar sind.

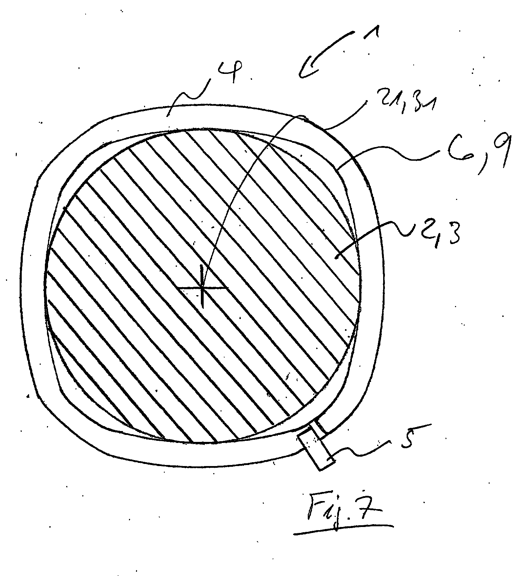

Fig. 7 zeigt einen Schnitt entlang der Linie I-I im Bereich der Antriebsachse 2 durch ein weiteres Ausführungsbeispiel gemäss Fig. 1. In Analogie zu den in den Fig. 5a und Fig. 5b dargestellten Schlingfederkupplungen 1 kann selbstverständlich auch ein vorgebbarer Spannbereich der Schlingfeder 4 einen nicht-kreisförmigen Querschnitt 9 aufweisen. Das heisst, durch eine verbesserte Formgebung der Schlingfeder 4 in einem vorgebbaren Spannbereich ist eine bessere Verteilung der Reibungskräfte erzielbar. Der Querschnitt 9 kann dabei, wie in Fig. 7 exemplarisch gezeigt, im speziellen beispielsweise die Form eines Quadrates mit abgerundeten Ecken haben. Selbstverständlich ist auch eine andere Querschnittsform, insbesondere die Form einer Ellipse oder jede andere geeignete nicht-kreisförmige Form des Querschnitts 9 der Schlingfeder 4 möglich. Wesentlich ist dabei in erster Linie, dass die Schlingfeder 4 im ausgekuppelten Zustand im Kontaktbereich der Antriebswelle 2 mit variierender Anpresskraft anliegt, wodurch das Auftreten von Instabilitäten minimierbar ist.

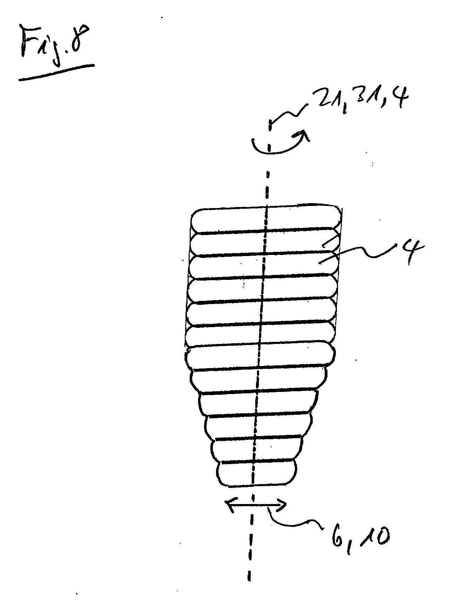

Zur Minimierung der Vibrationen der Schlingfederkupplung 1 ist es selbstverständlich auch möglich, dass der Innendurchmesser 10 der Schlingfeder 4 variabel ausgestaltet ist. Ein solches Ausführungsbeispiel einer Schlingfeder 4 einer erfindungsgemässen Schlingfederkupplung 1 ist in Fig. 8 schematisch dargestellt. Bei der in Fig. 8 gezeigten Ausführungsvariante variiert der Innendurchmesser 10 der Schlingfeder 4 entlang einer Federachse 41 in einem vorgebbaren Bereich. So kann die Schlingfeder 4 in Bezug auf die Federachse 41 beispielsweise konisch ausgeführt sein und insbesondere kann der Innendurchmesser 10 der Schlingfeder 4 entlang der Federachse 41 mit zunehmendem Abstand von der Trennstelle T zwischen Antriebswelle 2 und Abtriebswelle 3 in einem vorgebbaren Bereich abnehmen, so dass die Anpresskraft, mit der die Schlingfeder 4 im eingekuppelten Zustand insbesondere an der Antriebswelle 2 anliegt, mit zunehmendem Abstand von der Trennstelle T zwischen der Antriebswelle 2 und der Abtriebswelle 3 zunimmt. Die Sperre 5, in Fig. 8 nicht gezeigt, mit welcher die Schlingfederkupplung 1 in den ausgekuppelten Zustand überführbar ist, ist dabei insbesondere so angeordnet, dass die Sperre 5 die Schlingfeder 4 an ihrem kleinsten Innendurchmesser abhebt, also in dem Bereich, an dem die Schlingfeder 4 im eingekuppelten Zustand mit der grössten Anpresskraft an der Antriebswelle 2 anliegt. Auch durch diese Massnahme ist eine günstigere Verteilung der Reibungskräfte zwischen Schlingfeder 4 und Antriebswelle 2 im ausgekuppelten Zustand erreichbar.

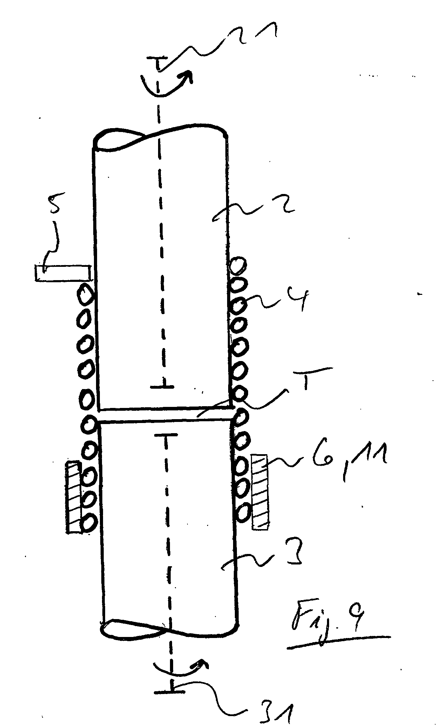

Zur Minimierung der Vibrationen im ausgekuppelten Zustand kann an der Antriebswelle 2 und / oder an der Abtriebswelle 3 auch ein Spannring 11 zum Anpressen der Schlingfeder 4 vorgesehen sein. In Fig. 9 ist ein Ausführungsbeispiel einer erfindungsgemässen Schlingfederkupplung 1 mit Spannring 11 gezeigt, der die Schlingfeder 4 an einem ihrer Enden im Bereich der Abtriebsachse 3 zusätzlich zur Federspannung an die Abtriebsachse 3 anpresst, was ebenfalls zu einer verbesserten Verteilung der Reibungskräfte zwischen der Schlingfeder 4 und der Antriebswelle 2 und / oder der Abtriebswelle 3 im ausgekuppelten Zustand, und damit zur Minimierung von inhärenten Instabilitäten und den damit verbundenen Vibrationen führt.

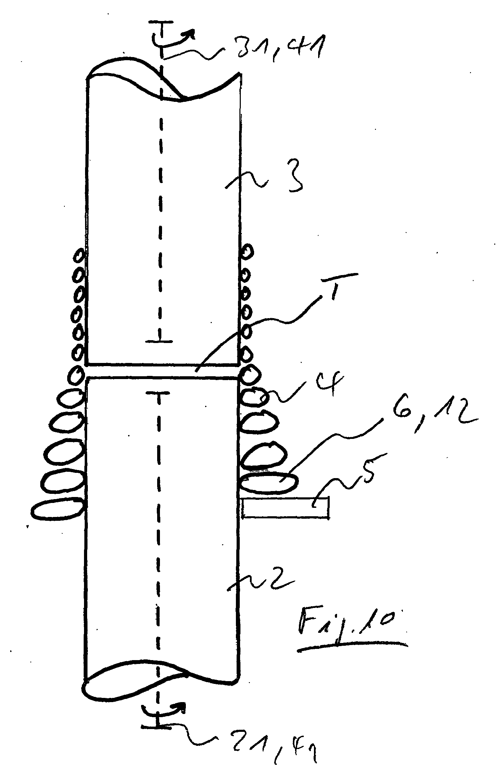

Eine weitere vorteilhafte Massnahme kann darin bestehen, dass, wie in Fig. 10 exemplarisch dargestellt, ein Drahtquerschnitt 12 der Schlingfeder 4 in einem vorgebbaren Abschnitt variiert. So kann der Drahtquerschnitt 12 der Schlingfeder 4 entlang der Federachse 41 mit zunehmendem Abstand von der Trennstelle T zwischen Antriebswelle 2 und Abtriebswelle 3 in einem vorgebbaren Bereich zunehmen, so dass die Anpresskraft, mit der die Schlingfeder 4 im eingekuppelten Zustand an der Antriebswelle 2 und / oder an der Abtriebswelle 3 anliegt, mit zunehmendem Abstand von der Trennstelle T zunimmt und / oder, dass im ausgekuppelten Zustand mit zunehmendem Abstand von der Trennstelle T die notwendige Kraft zum Abheben der Schlingfeder 4 von der Antriebsachse 3 zunimmt. Die Sperre 5 ist dabei, wie in Fig. 10 dargestellt, insbesondere so angeordnet, dass die Sperre 5 die Schlingfeder 4 an ihrem grössten Drahtquerschnitt 12 abhebt.

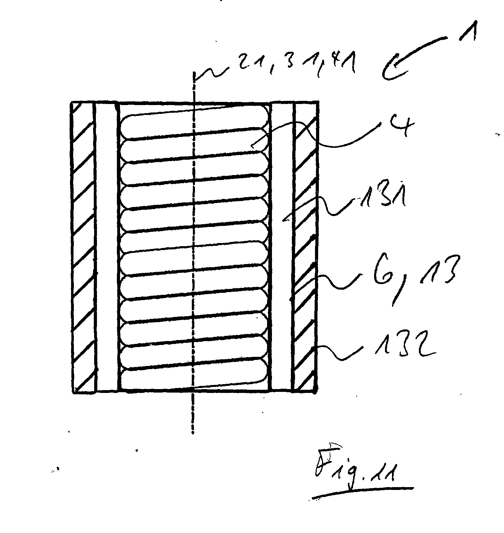

Fig. 11 zeigt schliesslich ein Ausführungsbeispiel einer erfindungsgemässen Schlingfederkupplung 1, wobei die Schlingfeder 4 in einem vorgebbaren Bereich in ein Dämpfungsmaterial 13 eingebettet ist, wodurch Vibrationen gedämpft werden können und so im ausgekuppelten Zustand minimierbar sind. Dabei kann die Schlingfederkupplung in einem vorgebbaren Bereich beispielswiese in einer mit einem Fluid 131 gefüllten Körper 132, insbesondere in einer Hülse 132, gelagert sein, wobei durch das Fluid 131 als Dämpfungsmatrial 13 die Vibrationen in der Schlingfederkupplung 1 auf ein Minimum reduzierbar sind. Das Fluid 131 kann dabei je nach Anforderung eine Flüssigkeit, ein Gas oder beispielsweise ein Elastomer sein. Das Dämpfungsmaterial 13 kann in einer speziellen Ausführungsform insbesondere auch ein an der Schlingfeder in einem vorgebbaren Bereich anliegender Schlauch oder ein Strumpf aus einem geeigneten Material, wie beispielsweise ein Schlauch oder ein Strumpf aus Metall oder Kunststoff sein.

Es versteht sich von selbst, dass die zuvor beschriebenen Mittel 6 zur Minimierung von Vibrationen der Schlingfederkupplung 1 in speziellen Ausführungsvarianten der erfindungsgemässen Schlingfederkupplung 1 sowohl an der Antriebsachse, als auch an der Abtriebsachse, im besonderen auch an beiden Achsen gleichzeitig vorgesehen sein können. Ein Massnahme oder eine Ausführungsvariante, die im vorliegenden Anmeldetext beispielsweise für die Antriebsachse exemplarisch beschrieben wurde, gilt analog selbstverständlich auch für die Abtriebsachse und umgekehrt. Insbesondere sind auch alle möglichen Kombinationen der beschrieben Ausführungsformen möglich.

## Patentansprüche

1. Schlingfederkupplung mit einer Antriebswelle (2) und einer Abtriebswelle (3), die jeweils um eine Antriebsachse (21) und eine Abtriebsachse (31) drehbar angeordnet sind, sowie einer Schlingfeder (4), die die Antriebswelle (2) und die Abtriebswelle (3) in einem eingekuppelten Zustand in Wirkverbindung hält, wobei ferner eine Sperre (5) vorgesehen ist, mit welcher die Schlingfederkupplung in einen ausgekuppelten Zustand überführbar ist, **dadurch gekennzeichnet, dass** Mittel (6) vorgesehen sind, mit welchen Vibrationen der Schlingfederkupplung im ausgekuppelten Zustand minimierbar sind.

2. Schlingfederkupplung nach Anspruch 1, bei welcher ein vorgebbarer Kontaktbereich (7) der Antriebswelle (2) und / oder der Abtriebswelle (3) einen nicht-kreisförmigen Querschnitt aufweist.

3. Schlingfederkupplung nach Anspruch 1 oder 2, wobei ein Durchmesser (8) der Antriebswelle (2) und / oder der Abtriebswelle (3) in einem vorgebbaren Kontaktbereich (7) variiert.

4. Schlingfederkupplung nach einem der vorangehenden Ansprüche, bei welcher ein vorgebbarer Spannbereich der Schlingfeder (4) einen nicht-kreisförmigen Querschnitt (9) aufweist.

5. Schlingfederkupplung nach einem der vorangehenden Ansprüche, wobei ein Innendurchmesser (10) der Schlingfeder (4) entlang einer Federachse (41) in einem vorgebbaren Bereich variiert.

6. Schlingfederkupplung nach einem der vorangehenden Ansprüche, wobei an der Antriebswelle (2) und / oder an der Abtriebswelle (3) ein Spannring (11) zum Anpressen der Schlingfeder (4) vorgesehen ist.

7. Schlingfederkupplung nach einem der vorangehenden Ansprüche, wobei ein Drahtquerschnitt (12) der Schlingfeder (4) entlang der Federachse (41) in einem vorgebbaren Abschnitt variiert.

8. Schlingfederkupplung nach einem der vorangehenden Ansprüche, wobei die Schlingfeder (4) in einem vorgebbaren Bereich in ein Dämpfungsmaterial (13) eingebettet ist, und / oder aus einem Material mit hoher Eigendämpfung aufgebaut ist.

9. Schlingfederkupplung nach einem der vorangehenden Ansprüche, bei welcher Mittel (6) zur Einstellung einer vorgebbaren Resonanzfrequenz vorgesehen sind.

10. Landwirtschaftliches Gerät, insbesondere Gartengerät, im speziellen eine Heckenschere oder ein Rasenmäher, mit einer Schlingfederkupplung (1) nach einem der vorangehenden Ansprüche.
